**Europäisches Patentamt**

**European Patent Office**

**Office européen des brevets**

(19)

(11) Numéro de publication: **0 065 906 B1**

## (12) FASCICULE DE BREVET EUROPEEN

(45) Date de publication du fascicule du brevet:
26.02.86

(51) Int. Cl.⁴: **G 01 P 3/68**

(21) Numéro de dépôt: **82400866.8**

(22) Date de dépôt: **11.05.82**

(54) Dispositif pour la détermination de la vitesse d'un produit en défilement par la méthode de corrélation.

(30) Priorité: **18.05.81 FR 8110002**

(43) Date de publication de la demande:
**01.12.82 Bulletin 82/48**

(45) Mention de la délivrance du brevet:
**26.02.86 Bulletin 86/9**

(84) Etats contractants désignés:
**BE DE GB IT NL**

(56) Documents cités:
**FR - A - 2 161 757**
**FR - A - 2 436 995**
**US - A - 3 942 022**

**TECHNISCHES MESSEN ATM, vol. 45, no. 4, avril 1978, pages 129-133, München (DE); Von K. Lickteig: "Strom- und Spannungsverstärker bei der Korrelations-analyse von Temperatursignalen bei Gegenwart elektrischer und magnetischer Störfelder"**

(73) Titulaire: **INSTITUT DE RECHERCHES DE LA SIDERURGIE FRANCAISE (IRSID), 185, rue du Président Roosevelt, F-78105 Saint Germain-en-Laye Cédex (FR)**

(72) Inventeur: **Petit, Pierre, 6, chemin des Pavillons Semecourt, F-57210 Maizieres-les-Metz (FR)**
Inventeur: **Verjux, Pierre, 5, rue Jacquemin Semecourt, F-57210 Maizieres-les-Metz (FR)**

(74) Mandataire: **Ventavoli, Roger et al, INSTITUT DE RECHERCHES DE LA SIDERURGIE FRANCAISE (IRSID) 185, rue Président Roosevelt, F-78105 Saint-Germain-en-Laye Cédex (FR)**

LIBER, STOCKHOLM 1986

## Description

La présente invention se rapporte à la détermination de la vitesse deproduits en défilement par corrélation de deux signaux aléatoires décalés dans le temps et liés au produit en déplacement.

Les dispositifs de détermination de vitesse par corrélation comportent généralement deux détecteurs disposés au voisinage du produit dont on veut mesurer la vitesse, et décalés l'un par rapport à l'autre dans le sens du défilement du produit.

Ces détecteurs enregistrent deux signaux statistiquement identiques, mais décalés dans le temps d'une durée dépendant de la distance séparant les détecteurs et de la vitesse à mesurer.

On peut comparer ces deux signaux entre eux par la méthode de corrélation, méthode déjà connue dans la technique considérée, selon laqulle on forme une fonction dite "fonction d'intercorrélation" presentant un maximum ou "pic de corrélation" dont la position, qui dépend de l'intervalle de temps entre les signaux détectés, constitue l'indicateur de la vitesse du produit.

On forme la fonction d'intercorrélation de deux signaux décalés l'un par rapport à l'autre en introduisant, après mise en forme, lesdits signaux dans un appareil nommé corrélateur, dont plusieurs types sont déjà disponibles dans le commerce, un tel corrélateur présentant toujours les fonctions suivantes sous une forme ou une autre : retard, produit, intégration.

Dans le cas du laminage de produits tels que des brames, billettes, tôles ou profilés divers, il est utile de connaitre avec précision la vitesse du produit laminé, en particulier lorsqu'on veut introduire la mesure de cette vitesse dans un système d'automatisation du laminoir.

Afin d'éviter d'avoir à former la totalité de la courbe de corrélation, (ce qui est surabondant puisque seule la position du pic présente de l'intérêt) il a été proposé d'utiliser l'information disponible à la sorti du corrélateur sous la forme d'un signal d'erreur agissant sur un dispositif de commande du retard de façon à asservir ledit retard en vue de le bloqer sur la valeur pour laquelle on obtient le pic de corrélation.

Dans le brevet FR-A-2.161.757 (IRSID), on a décrit une méthode de ce type, ainsi qu'un dispositif de mise en oeuvre comprenant deux détecteurs décalés dans l'espace et connectés, par l'intermédiai d'une unité de mise unité de mise en forme des signaux, comprenant un filtre passe-haut suivi d'un digitaliseur, à l'entrée d'un corrélateur à retard asservi comprenant successivement un registre à décalage, un e'tage de multiplication, un étage d'intégration et un amplificateur différentiel, ledit retard étant asservi par l'intermédiaire d'un convertisseur tension-période pilotant le corrélateur, à un signal élaboré par un sommateur monté à la sortie du corrélateur, et comprenant également un indicateur de vitesse relié audit convertisseur et des moyens fournissant une valeur approximative°de la vitesse du produit pour positionner le retard initial du corrélateur, ces moyens étant reliés à la second entrée du sommateur. ,

Dans la pratique, cette méthode est bien adaptée au cas de produits dont la vitesse instantanée de défilement est régulière ou faiblement variable, mais elle devient généralement inefficace lorsque la vitesse du produit varie brutalement, comme c'est le cas par exemple en aval d'une cisaille volante.

On a déjà proposé une solution à ce problème qui consiste à asservir le gain de boucle du corrélateur aux variations de vitesse du produit, de manière à rendre le gain proportionnel à cette dernière. L'asservissement s'effectue par un moyen de mesure annexe indépendante du corrélateur et fournissant un signal représentatif, de façon approchée, de la vitesse du produit

Cette solution, décrite dans le brevet FR-A-2.436.995-(IRSID), demeure toutefois limitée dans ses possibilités, qui dépendent notamment de la capacité du moyen annexe de mesure de vitesse à suivre les variations brutales de vitesse du produit.

Le but de la présente invention est de proposer une nouvelle solution au problème posé par la mesure, au moyen de la méthode de corrélation, de la vitesse d'un produit pouvant être soumis à des brusques variations de vitesse.

A cet effet, l'invention a pour objet un dispositif pour la détermination, par la méthode de la fonction de corrélation, de la vitesse d'un produit en défilement, dispositif comprenant :.

- deux détecteurs décalés dans l'espace dans le sens de défile ment du produit,
- un premier corrélateur à retard asservi et à double entrée, dont les entrées sont connectées respectivement aux détecteurs, ledit premier corrélateur calculant deux valeurs décalées de la fonction de corrélation de deux signaux présents aux deux entrées dudit premier corrélateur et comprenant successivement un registre à décalage à deux sorties décalées l'une par rapport a l'autre, un double étage de multiplication, un double étage d'intégration et un étage d'amplification différentielle, ledit retard étant asservi, par l'intermédiaire d'un premier convertisseur tension-période, à un signal d'erreur élaboré par un premier sommateur dont une première entrée est reliée à la sortie de l'étage d'amplification différentielle et dont une seconde entrée reçoit une valeur de consigne représentative de la vitesse initiale approximative de défilement du produit et

- un indicateur de vitesse du produit dont l'entrée peut être reliée à la sortie du premier convertisseur, dispositif dans lequel chaque détecteur est connecté au premier corrélateur par l'intermédiaire d'une unité de mise en forme, ladite unité comprenant successivement un filtre passe-haut et un comparateur , et caractérisé en ce qu' un filtre passe-bas est positionné entre le filtre passe-haut et le comparateur en ce que ledit dispositif comprend en outre un second corrélateur à retard asservi, comprenant les mêmes composants et agencés de la même manière que ceux du premier corrélateur et dont le retard est également asservi, par l'intermédiaire d'un second convertisseur tension-période à un signal d'erreur élaboré par un second sommateur dont une première entrée est connectée de la même manière que la première entrée du premier sommateur et dont la seconde entrée est reliée à la sortie du premier sommateur, les deux entrées du second corrélateur étant connectées à la sortie des filtres passe-haut par l'intermediaire de comparateurs, et en ce que l'entrée de l'indicateur de vitesse du produit peut être reliée à la sortie du second convertisseur.

Comme on le comprend, l'invention consiste, dans l'une de ses caractéristiques essentielles, en un système à corrélateur à retard asservi de type connu dans lequel on rajoute un filtre passe-bas sur chacune des voies de traitements des deux signaux, à la suite des filtres passe-haut habituels, comme cela est déjà également connu en soi, (voir la publication "Strom und Spannungsverstärker bei der Korrelations-analyse von Temperatursignalen bei Gegenwart elektrischer und magnetischer Störfelder". Technisches Messen ATM, vol. 45, n° 4, Avril 1978 p. 129-133, München (R.F.A.), ou le brevet US-A 3 942 022 lequel propose de disposer, entre les détecteurs et le corrélateur, un filtre passe bande).

Ce faisant, on obtient une courbe de corrélation couvrant un large spectre en temps de retard correspondant à une large gamme de vitesses susceptibles d'être prises par le produit en défilement. De cette façon, le système ne décroche pas, même lors des accélérations brutales du produit.

En contrepartie, cependant, la courbe de corrélation est relativement aplatie, avec un pic non parfaitement résolu, ce qui entraîne une certaine perte de précision dans la mesure des vitesses. Mais, grâce à la seconde caractéristique essentielle de l'invention, on retrouve une précision souhaitable en incorporant au système un second corrélateur,en principe monté en parallèle avec le premier, mais ne présentant pas de filtre passe-bas sur ses lignes d'entrée. Ce second corrélateur est piloté par le premier dont le signal de sortie, représentatif de la valeur approchée de la vitesse instantanée, lui sert de consigne à cet effet.

L'invention consiste donc en un système à double boucle d'asservissement en parallèle, ayant chacune son propre corrélateur.

L'une des boucles, dite "boucle de vitesse", fournit un pic de corrélation bien résolu, qui permet de connaître avec précision la vitesse instantanée du produit en défilement. L'autre boucle, dite "boucle lâche", sert de pilote à la première en lui fournissant des valeurs de consigne représentative à tout instant, mais de façon approchée, de la vitesse du produit. A cet effet, cette seconde boucle élabore un pic de corrélation aplati, qui entraîne une certaine imprécision sur la position du sommet, donc sur la vitesse, mais qui, en contrepartie, couvre toute la plage de vitesses susceptibles d'être prises par le produit.

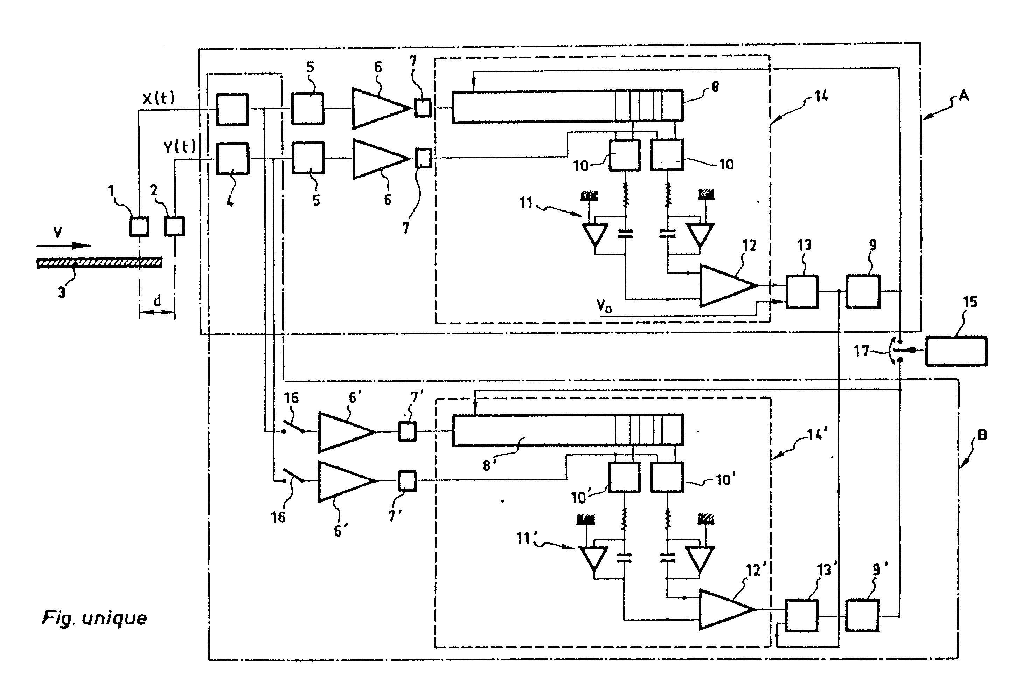

L'invention sera bien comprise et d'autres aspects et avantages apparaîtront plus clairement au vu de la description qui suit donnée en référence à la figure unique annexée représentant un schéma fonctionnel du ispositif de mesure.

Deux organes de détection de signaux référencés respectivement 1 et 2 sont disposés au voisinage d'un produit en défilement 3 et decalés l'un de l'autre dans le sens de déplacement du produit d'une distance d. Ces organs de détection consistent en des lunettes photoélectriques fournissant un signal électrique f (t), image de la luminance f (x) du produit suivant un axe parallèle au vecteur vitesse, les grandeurs x et t étant reliées par la relation

$$x = v.t$$

où t est temps et v la valeur de la vitesse du produit. On détecte de cette façon deux signaux semblables notés X (t) et Y (t) décalés dans le temps. Les signaux en provenance des organes de détection sont filtrés respectivement dans un filtre passe-haut 4 de façon à éliminer les composantes spectrales dues aux ondulations du produit en défilement et aux parasi tes à fréquence industrielle at à ne conserver que les composantes utiles correspondant aux irrégularités de luminance de la surface du produit. Ce filtre peut consister en un circuit RC à capacité variable permettant un réglage de la fréquence de coupure basse entre 50 et 1 000 Hz. Les signaux issus des filtres 4 sont ensuite introduits dans des filtres passe-bas 5, dont le rôle, qui est un des éléments essentiels de l'invention, sera précisé plus loin.

Les signaux ainsi traités sont alors éventuellement amplifiés dans un amplificateur 6, puis introduits respectivement dans une unité de digitali sation 7 constituée par un comparateur. Le comparateur délivre des signaux ne pouvant prendre que deux valeurs égales et de signe contraire, la valeur positive correspondant par exemple à un signal d'entrées passant par zéro en croissant, la valeur négative correspondant alors à un signal d'entrées passant par zéro en décroissant. La diode permet d'élimine les parties négatives des signaux. On obtient ainsi des trains d'impulsion en "tout ou rien", le niveau 1 correspondant à un signal positif, et le niveau 0 à un signal négatif. Le niveau 1 peut être fixé à une tension désirée par un diviseur. On dispose alors de deux signaux X (t) et Y (t) consistant en de trains d'impulsions aléatoires, statistiquement semblables aux cignaux détectés, le signal X (t) reflétant le signal détecté par la lunette disposée en amont par rapport au sens de défilement du produit, le signal Y (y) correspondant au signal détecté aval.

On rappelle que ces deux signaux sont identiques et décalés dans le temps d'un intervalle dépendant de la distance d et de la vitesse v définies précédemment. Pour former la fonction d'autocorrelation de X (t) et Y (t),on envoie le signal X (t) dans un dispositif de retard introduisant un retard τ et on forme l'intégrale du produit X (t-r). Y (t), soit C (XY). Le dispositif à retard est un registre à décalage 8 piloté par une horloge à fréquence variable 9. Ce registre comprend n étages, chaque étage recevant une quantité d'informations de 1 bit, ledit registre comportant des sorties de prélèvement du signal retardé, par exemple sur des étages n et n-4, symétriques par rapport à l'étage n-2. Ce registre est constitué dans le cas d'espèce par un registre de 205 bits muni d'une sortie de prélèvement sur les étages 201 et 205. Un étage de multiplication 10 est disposé respectivement à chaque sortie de prélèvement du registre, de façon à former les produits

$$Y(t) \cdot X_{201}(t) \text{ et } Y(t) \cdot X_{205}(t).$$

Les deux produits sont intégrés à l'aide d'un étage d'intégration 11 constitué de deux amplificateurs opérationnels.

On obtient deux valeurs de la fonction de corrélation C (XY) soit $C_{201}$ et $C_{205}$ (XY) correspondant respectivement à des retards $\tau$ du signal X (t) de 201 $\sigma_2$ et de 205 $\sigma_2$ où $\sigma_2$ est la période de l'horloge 9. Les deux valeurs de la fonction de corrélation sont introduites à l'entrée d'un amplificateur différentiel à gran gain 12 dont la sortie est reliée à une entrée du sommateur recevant une consige manuelle Vo représentative de la vitesse initiale du produit 3.

L'ensemble constitué par le registre à décalage 8, l'étage de multiplication 10, l'étage d'intégration 11 l'étage d'amplification différentielle 12, forme un corrélateur référencé 14. La valeur du signal Vo détermine la fréquence initiale de l'horloge 9 et ne peut représenter la vitesse initiale du produit que de façon approchée, dans la mesure toutefois où la période $\sigma_2$ de l'horloge est telle que la position du pic de la fonction de corrélation corresponde à un étage du registre 8 situé entre les deux étages scrutés.

Le signal d'erreur ($\Delta V$), fourni par l'amplificateur différentiel 12 à partir des signaux $X_{201}$ (t) et $X_{205}$ (t) issus respectivement des étages 201 et 205 du registre 8, agit sur $\sigma_2$, par l'intermédiaire du sommateur 13 de manière à annuler ledit signal. On réalise ainsi un corrélateur dont le retard est asservi à un signal d'erreur représentatif de la vitesse relative du produit par rapport à la valeur de consigne Vo.

Un dispositif indicateur de vitesse 15, constitué par un fréquencemètre muni d'un diviseur approprié,est connecté à la sortie de l'horloge 9. Il permet d'afficher la valeur exacte de la vitesse pendant toute la durée de défilement du produit. Cette valeur est égale au quotient de la distance séparant les deux axes des organes de détection par le retard $203.\sigma_2$ où $\sigma_2$ est la période de l'horloge lorsque les deux valeurs calculé de la fonction de corrélation sont identiques.

En effet, ces valeurs correspondent à des points de la courbe représentative de la fonction d'autocorrélation située de part et d'autre du pic de corrélation de ladite courbe, laquelle est symétrique par rapport à ce pic. Si f est la fréquence correspondante de l'horloge, on a alors :

$$v = \frac{d}{203} f.$$

Le choix de deux sorties de prélevement du signal X (t) retardé sur deux étages sépares par un nombre impair d'étages permet d'obtenir un facteur de division entier. La vitesse peut donc être inscrite sur l'afficheur 15 relié à l'horloge 9 et/ou être introduit directement comme donnée dans um système d'automatisation. L'ensemble, constitué par les filtres passe-haut 4 et passe-bas 5, les amplificateurs 6, les digitaliseurs 7, le corrélateur 14, le sommateur 13 et l'horloge 9, forme une boucle de corrélation à retard asservi, référencée A, pour la mesure de vitesse.

Comme on le voit, une seconde boucle de mesure, référencée B, est montée en parallèle avec la précédente à la sortie des filtres passehaut 4. Cette boucle est composé, à l'exclusion des filtres passe-bas, des mêmes composants que la boucle A, agencés de la même manière et fonctionnant selon le même principe. Elle comprend donc successivement, les filtres passe-haut 4 (commun avec la boucle A) un étage d'amplification 6', des bascules 7', un corrélateur 14', un sommateur 13' et une horloge 9' le corrélateur 14 étant lui-même composé d'un registre à décalage 8',d'un étage de multiplication 10', d'un etage d'intégration 11' et d'un étage d'amplification différentiel 12'.

On voit également que le sommateur 13' reçoit sur l'une de ses entrées une valeur de consigne qui est, cette fois, représentée par le signal de sortie du sommateur 13 de la boucle A.

Par ailleurs, deux interrupteurs 16 sont prévus en amont de l'étage d'amplification 6, de même qu'un sélecteur à deux positions 17 placé à l'entrée de l'afficheur 15 et permettant de le relier à la sortie de l'horloge 9 ou de l'horloge 9' selon que, respectivement, les interrupteurs 16 sont ouverts ou fermés.

Supposons, dans un premier temps, la boucle B déconnectée (interrupteurs 16 ouverts et sélecteur 17 fermé sur la sortie de l'horloge 9).

Dans le cas d'un produit 3 défilant à une vitesse fixe ou lentement variable, le systeme connu, c'est-à-dire la boucle A sans les filtres passebas 5, suffit à assurer l'asservissement.

Dans le cas d'une accélération importante, un petit élément de surface du produit visé passe sous la lunette 1 à la vitesse $V_1$, puis sous la lunette 2 à la vitesse $V_2$ supérieure à $V_1$. Plus $V_2$ diffère de $V_1$, plus la fonction d'intercorrélation $C_{XY}$ tend vers zéro; la durée de ce phénomène étant approximativement égale à la durée de l'accélération. Autrement dit, pendant toute cette durée, le pic "virtuel" de corrélation s'évanouit et l'intégrateur 11 ne dispose plus d'aucune information lui permettant d'élaborer un signal d'écart $\Delta V$. Lorsque, à la fin de la période d'accélériont, le pic de corrélation réapparaît à une abscisse $\tau_2$ (inférieur à $\tau_1$),les informations

relatives aux étages 201 et 205 du registre à décalage 8 restent nulles ou quasi-nulles et l'intégrateur ne peut donc faire aucune correction. On dit alors que la boucle d'asservissement a décroché. (Bien entendu, le raisonnement reste le même avec $\tau_2$ supérieur à $\tau_1$ l'on est en présence d'une décélération du produit).

Conformément à l'invention, on remédie à ce grave inconvénient en diminuant, au moyen des deux filtres passe-bas 5, la bande passante des signaux X (t) et Y (t) avant de les appliquer au corrélateur de la boucle A.

L'acuité de la courbe d'intercorrélation étant directement proportionnelle à cette bande passante, on obtient par ce moyen une courbe de corrélation beaucoup plus aplatie. Ainsi, dans le cas évoqué précédemment lorsque le pic réapparaît, les informations relatives aux étages 201 et 205 du registre à décalage 8 réapparaîssent avec les valeurs relatives ci-après

$$U_{201} > U_{205} > 0 \text{ pour une accélération,}$$

$$0 < U_{201} < U_{205} \text{ pour une décélération,}$$

et l'intégrateur 11 dispose à nouveau des informations nécessaires pour élaborer le signal $\triangle V$

Ainsi, dans les limites de $\triangle V$ couramment rencontrées sur un laminoi par exemple (tout au moins un laminoir à chaud), il est possible d'ajuster la bande passante de X (t) et Y (t) pour ne décrocher en aucun cas.

Toutefois, il apparaît un autre inconvénient : lorsque la bande passante diminue, le sommet du pic d'intercorrélation s'arrondit et la précision de la mesure décroît proportionnellement.

C'est là qu'intervient, conformément à l'invention, la seconde boucle B, dite boucle de vitesse et montée en parallèle avec la boucle lâche A.

La boucle B est mise en service en fermant les interrupteurs 16 et en basculant le sélecteur 17 sur la sortie de l'horloge 9'.

Cette boucle de vitesse est semblable dans sa structure à la boucle lâche, mais ne comporte pas de filtre passe-bas. De ce fait, l'acuité du pic de corrélation est conservée puisqu'on fournit à cette boucle une valeur de consigne élaborée par la boucle lâche A et qui est toujours, sauf pendant et un peu après les variations de vitesse, égale à la vitesse du produit, à la précision près de la boucle lâche. On comprend do que cette seconde boucle B, pilotée par la boucle lâche A, n'a pour rôle que de parfaire la précision de la mesure.

En résumé, on aura compris que le dispositif selon l'invention sous cette forme de réalisation est simplement constitué de deux boucles d'asservissement A et B, mises en parallèle sur X (t) et Y (t) avec les aménage ments suivants :.

. on intercale deux filtres passe-bas réglables 6 en X (t) et Y (t) sur la boucle lâche A,

. la consigne manuelle Vo est appliquée à la boucle lâche A qui, élaborant un signal d'erreur $\triangle V$, fournit une première approximation de la vitesse vraie : $V' = Vo + \triangle V$,

. V' est appliquée comme valeur de consigne à la boucle de vitesse qui, élaborant un second signal d'erreur $\triangle V'$, fournit avec précision la vitesse vraie : $V = V, + \triangle V,$.

Il doit être bien compris que le système à double boucle n'apport rien de plus que le système connu à boucle unique sur le plan de la précision des mesures. Son unique fonction est de permettre de rattraper, et non de suivre, les variations rapides de vitesse.

En particulier, dans le cas d'une mesure de longueur du produit par intégration de la vitesse, il faut garder à l'esprit que la vitesse lu est légèrement fausse par défaut pendant les périodes d'accélération, et par excès dans le cas contraire, l'erreur étant proportionnelle à dV/dt.

**Revendications:**

1°) Dispositif pour le détermination, par le méthode de la fonction de corrélation, de la vitesse d'un produit en défilement dispositif comprenent

- deux détecteurs (1 et 2) décalés dans l'espace dans le sens de défilement du produit (3),
- un premier corrélateur (14) à retard assarvi et à double entrée, dont les entrées sont connectées respectivement aux décteurs (1 at 2), ledit premier corrélateur calculant deux valeurs décalées de le fonction de corrélation de deux signaux présents aux deux entrées dudit premier corrélateur et comprenant successivement un registre à décalage (8) à deux sorties décalées l'une pa rapport à l'autre, un double étage de multiplication (10), un double étage d'intégration (11) et un étage d'amplification différentiell (12), ledit retard étant asservi, par l'intermédiaire d'un premier convertisseur (9) tension-période, à un signal d'erreur élaboré par un premier sommateur (13) dont une première entrée est reliée à la sortie de l'étage d'amplification différentielle (12) et dont une seconde entrée reçoit une valeur Vo de consigne représentative de la vitesse initiale approximative de défilement du produit et

- un indicateur (15) de vitesse du produit dont l'entrée peut être reliée à la sortie du premier convertisseur (9) dispositif dans lequel chaque détecteur (1, 2) est connecté au premier corrélateur (14) par l'intermédiaire d'une unité de mise en forme, ladite unité comprenant successivement un filtre passehaut (4) et un comparateur (7), et caractérisé en ce qu'un filtre passe-bas (5) est positionné entre le filtre passe-haut (4) et le comparateur (7), en ce que ledit dispositif comprend en outre un second corrélateur (14') à retard asservi, comprenant les mêmes composants (8', 10', 11', et 12') agencés de la même manière que ceux du premier corrélateur (14) et dont le retard est également asservi, par l'intermédiaire d'un second convertisseur (9) tension-période, à un signal d'erreur élaboré par un second sommateur (13') dont une première entrée est connectées de la même manière que la première entrée du premier sommateur (13) et dont la seconde entrée est reliée à la sortie du premier sommateur (13), les deux entrées du second corrélateur (14') étant connectées à la sortie des filtres passe-haut (4) par l'intermédiaire de comparateurs (7'), et en ce que l'entrée de l'indicateur (15) de vitesse du produit peut également étre reliée à la sortie du second convertisseur (9').

2° Dispositif selon la revendication 1, caractérisé en ce que des interrupteurs (16) sont prévus entre le second corrélateur (14') et la sortie des filtres passe-haut (4) et en ce que un sélecteur (17) à deux positions est prévu à l'entrée de l'indicateur (15) de vitesse permettant de la relier à l'un ou l'autre des convertisseurs (9 ou 9').

**Patentansprüche**

1°) Vorrichtung zur Bestimmung der Geschwindigkeit eines durchlaufenden Produktes mittels der Korrelationsmethode, Vorrichtung bestehend aus :
. zwei Messfühlern (1 und 2) mit Abstand in der Durchlaufsrichtung des Produktes (3) versetzt,
. einem ersten Korrelator (14) mit geregelter Verzögerung und doppeltem Eingang, dessen Eingänge jeweils an die Messfühler (1 und 2) angeschlossen sind, genannter Korrelator, der zwei versetzte Werte der Korrelationsmethode, zweier an den beiden Eingänge des genannten ersten Korrelatore vorhandenen Signale berechnet, und nacheinander, ein Schieberegister (8), mit zwei, der eine bezüglich zum anderen, versetzte Ausgänge, eine doppelte Multiplikationsstufe (10) eine doppelte Integrationsstufe (11) une eine Differentialverstärkungsstufe (12) enthaltend, die genannte Verzögerung, durch Vermittlung eines ersten Spannungs-Zeit Wandlers (9) auf ein Fehlersignal geregelt, das durch einen ersten Summator (13) ausgearbeitet wird davon ein erster Eingang mit dem Ausgang der Differentialverstärkungsstufe (12) verbunden ist, und davon ein zweiter Eingang der einen Sollwert (Vo), der die annäherende Durchlaufsanfangsgeschwindigkeit darstellt, erhält, und
. ein Geschwindigkeitsanzeiger (15) des Produktes dessen Eingang mit dem Ausgang des ersten Wandlers (9) verbunden werden kann,
Vorrichtung in welcher jeder Messfühler (1, 2) an den ersten Korrelator (14) durch Vermittlung einer Formatsteuerungseinheit angeschlossen ist, genannte Einheit nacheinander einen Hochpassfilter (4) und einen Komparator (7) enthaltend, und dadurch gekennzeichnet dass ein Tiefpassfilter (5) zwischen dem Hochpassfilter (4) und dem Komparator (7) eingesetzt ist, dadurch dass die genannte Vorrichtung ausserdem ein zweiter Komparator (14') mit geregelter Verzögerung enthält, der die gleichen Komponente (8', 10', 11' und 12') enthält die auf die gleiche Weise wie diejenigen des ersten Korrelators (14) angeordnet sind und deren Verzögerung auch, durch Vermittlung eines zweiten Spannungs-Zeit Wandlers (9') auf ein, durch einen zweiten Summator (13') ausgearbeitetes Fehlersignal geregelt ist, davon ein erster Eingang auf die gleiche Weise wie der erste Eingang des ersten Summators (13) verbunden ist, die beiden Eingänge des zweiten Korrelators (14') sind dabei, durch Vermittlung des Komparators (7'), an den Ausgang des Hochpassfilter (4) angeschlossen und dadurch dass der Eingang des Geschwindigkeitsanzeigers (15) des Produktes auch an den Ausgang des zweiten Wandlers (9') angeschlossen werden kann.

2°) Vorrichtung nach dem Anspruch 1 dadurch gekennzeichnet dass zwischen dem zweiten Korrelator (14') und dem Ausgang des Hochpassfilters (4), Schalter (16) vorgesehen sind und dadurch dass eine Auswahlvorrichtung (17) mit zwei Stellungen am Eingang des Geschwindigkeitsanzeigers (15) vorgesehen ist, die erlaubt denselben mit dem einen oder dem anderen der Wandler (9 oder 9') zu verbinden.

**Claims**

1) Apparatus for determination, using the correlation method, of the going-past rate, of a lengthwise product, said apparatus including :
. two sensors (1 and 2) offset in space in the direction the product (3) is moving,
. a first delay-controlled correlation device (14) with a dual input, the said inputs being respectively connected to sensors (1 and 2), said first correlation device calculating two offset values of the correlation function of two signals incoming at both inputs of said first correlation device and comprising successively: a shift register (8) with two outputs offset with one another, a dual multiplier stage (10), a dual integrating stage (11) and a differential amplification stage (12), the said delay being controlled, through a first voltageperiod converter (9) to an error signal generated by a first adder (13) of which a first input is connected to the output of the differential-amplification stage (12) and a second output receives a set value (Vo), representative of the initial goingpast rate of the product, and
. an indicator (15) showing the going-past rate of the product and the input of which may be connected to the

6

output of the first converter (9), apparatus in wich each sensor (1,2) is connected to the first correlation device (14) through a shaping unit, said unit comprising successively a high-pass filter (4) and a comparator and characterized in that a low-pass filter (5) is located between the high-pass filter (4) and the comparator (7), in that said apparatus also includes a second delay-controlled correlation device (14') comprising the same components (8',10', 11' and 12') arranged in the same way as the first correlation device (14) the delay of which is also controlled, through a second voltaqeperiod converter (9'),to an error signal generated by a second adder (13') of which the first input is connected in the same way as the first input of the first adder (13) and the second input of which is connected to the output of the first adder (13), both inputs of the second correlation device (14') being connected to the output of the high-pass filters (4) through comparators (7') and in that the input of the indicator (15), denoting the speed of the product, may be connected to the output of the second converter (9').

2) Apparatus, according to claim 1, characterized in that the switches (16) are provided in-between the second correlation device (14') and the output of the high-pass filters 10 and in that a two-way selector switch (17) is provided at the input of the speed indicator (15) thereby interconnecting same to either converter (9 or 9').

Fig. unique

X(t)

Y(t)

V

d

0 065 906